Europäisches Patentamt

European Patent Office

Office européen des brevets

(11) Veröffentlichungsnummer: **0 264 032**
**A2**

(12) # EUROPÄISCHE PATENTANMELDUNG

(21) Anmeldenummer: 87114357.4

(22) Anmeldetag: 01.10.87

(51) Int. Cl.4: **G05B 11/30** , G05D 7/06 , G05D 16/20

(30) Priorität: 04.10.86 DE 3633852

(43) Veröffentlichungstag der Anmeldung:
20.04.88 Patentblatt 88/16

(84) Benannte Vertragsstaaten:
BE CH FR GB IT LI NL SE

(71) Anmelder: BOPP & REUTHER GMBH
Carl-Reuther-Strasse 1
D-6800 Mannheim 31(DE)

(72) Erfinder: Hartfiel, Johannes, Dr. rer. nat.
Neueichwaldstrasse 5
D-6800 Mannheim 31(DE)
Erfinder: Schmitt, Manfred, Ing.
Johann-Casimier-Strasse 17
D-6701 Friedelsheim(DE)

(54) **Verfahren zum Regeln von durchflussabhängigen Regelgrössen.**

(57) Bei diesem Verfahren erfolgt das Regeln von durchflußabhängigen Regelgrößen, z. B. Druck mittels eines Stellventils (2), dessen Drosselkörper von einem an einen Hydrauliksteuerkreis (7 bis 14) angeschlossenen Stellzylinder (5) durch Zuführen oder Abführen von Hydraulikflüssigkeit in seiner Hubstellung verändert wird. Für den Hub des Drosselkörpers werden von der Regelabweichung, von dem zeitlichen Integral und dem zeitlichen Differenzial dieser Regelabweichung bestimmte Kennlinien erstellt und elektronisch gespeichert. Die Regelgröße wird in kurzer Taktzeit gemessen und gespeichert. Das zeitliche Integral und das zeitliche Differenzial der Regelabweichung wird in dieser Taktzeit errechnet und entsprechend den gespeicherten Kennlinien wird für jeden Takt die Größe des Hubschrittes festgelegt. Im Rechner (18) wird dann die pro Takt über schnellansprechende Magnetventile (15, 24) abzuführende oder zuzuführende Menge der Hydraulikflüssigkeit berechnet und hieraus werden die Öffnungsimpulse der Magnetventile (15,24) für jeden Takt bestimmt, die den Verstellvorgang des Stellventils (2) bei kleinen Regelabweichungen in kleinen Hubschritten und bei großen Regelabweichungen in großen Hubschritten steuern.

## Verfahren zum Regeln von durchflußabhängigen Regelgrößen

Die Erfindung bezieht sich auf ein Verfahren zum Regeln von durchflußabhängigen Regelgrößen wie Druck, Füllstand oder dergleichen mittels eines den Durchfluß steuernden Stellventils, dessen Drosselkörper von einem an einen Hydraulikkreislauf angeschlossenen Stellzylinder durch Zuführen oder Abführen von Hydraulikflüssigkeit in seiner Hubstellung verändert wird, wobei die Verstellung des Drosselkörpers in Abhängigkeit der Regelabweichung Istwert minus Sollwert der Regelgröße, vom zeitlichen Integral dieser Abweichung und vom zeitlichen Differential dieser Abweichung erfolgt.

Es sind Regelverfahren bekannt, bei denen das Proportionalverhalten, das Integralverhalten sowie das Differentialverhalten nicht nur einzeln sondern auch in Kombination miteinander bei der Umsetzung der Regelabweichung in Hubverstellungen des Drosselkörpers benutzt werden. Bei diesen bekannten Regelverfahren werden zur Umsetzung der Regelabweichung in Stellsignale jeweils Übertragungsbeiwerte für das Proportionalverhalten, das Integralverhalten und das Differentialverhalten am Regler mechanisch eingestellt oder numerisch eingegeben. Unter der Vielzahl der möglichen Beiwerte ist die Beschränkung auf diese drei Übertragungsbeiwerte eine Einschränkung, die nicht für alle Regelstrecken ein optimales Regelverhalten ergibt.

Aufgabe der Erfindung ist es, ein Regelverfahren zu finden, das sich an jede Regelstrecke anpassen läßt.

Die Lösung dieser Aufgabe wird in den Verfahrensmerkmalen des Anspruchs 1 gesehen.

Dadurch, daß für die Umsetzung der Regelabweichung in Stellsignale speziell an die Erfordernisse der jeweiligen Regelstrecke angepaßte Kennlinien erstellt und elektronisch gespeichert werden, kann die Umsetzung der Regelabweichung, des Integrals der Regelabweichung und des Differentials der Regelabweichung wesentlich genauer als bisher in Hubschritte umgewandelt werden. Somit läßt sich eine wesentlich bessere Regelgüte erreichen. Durch die Verwendung schnell ansprechender Magnetventile, die bereits innerhalb von zwei ms öffnen und schließen, können sehr kleine Hubschritte ausgeführt werden, so daß der Durchfluß sehr feingestuft verändert werden kann.

Ein noch feineres Ansprechen der Regelung bei kleinen Regelabweichungen und ein noch schnelleres Reagieren auf große Regelabweichungen wird gemäß dem Anspruch 2 dadurch erreicht, daß schnell ansprechende Magnetventile mit veränderbarem Öffnungsquerschnitt vorgesehen sind. Dadurch läßt sich die abzuführende oder zuzuführende Menge an Hydraulikflüssigkeit nicht nur durch die Öffnungszeit sondern auch durch die unterschiedlichen Öffnungsquerschnitte der Magnetventile bestimmen, wodurch die Spanne zwischen der kleinsten und der größten abzuführenden bzw. zuzuführenden Menge der Hydraulikflüssigkeit wesentlich vergrößert wird. Die möglichen Änderungen der Öffnungsquerschnitte der verwendeten Magnetventile werden elektronisch gespeichert,und bei der Berechnung der Öffnungspulse werden die jeweils verwendeten Öffnungsquerschnitte der Magnetventile berücksichtigt.

Werden als schnell ansprechende Magnetventile entsprechend dem Merkmal des Anspruchs 3 vorgesteuerte Magnetventile vorgesehen, so wird der jeweils freie Strömungsquerschnitt selbsttätig durch die Dauer der Öffnungspulse gesteuert. Bei kurzen Öffnungspulsen öffnet nur der Vorsteuerkegel mit kleinem Querschnitt, während bei längeren Öffnungspulsen der große Hauptkegelquerschnitt freigegeben wird. Will man die Stellzeiten für den Hub des Drosselkörpers des Stellventils noch weiter verkürzen, so empfiehlt sich entsprechend den Merkmalen des Anspruches 4 die Anordnung mehrerer schnell ansprechender Magnetventile mit gleichem oder unterschiedlichem Öffnungsquerschnitt in Parallelschaltung. Bei großen ab-oder zuzuführenden Mengen der Hydraulikflüssigkeit können dann das oder die parallel geschalteten Magnetventile zugeschaltet werden, so daß sich der Durchströmquerschnitt verdoppelt oder bei der Parallelschaltung von mehreren Magnetventilen sogar vervielfacht.

Damit die Berechnung der Öffnungspulse im Rechner fehlerfrei erfolgen kann, wird entsprechend dem Anspruch 5 weiterhin vorgeschlagen, die Anzugszeit und die Abfallzeit der schnell ansprechenden Magnetventile bei der Berechnung der Öffnungspulse als Korrekturgröße zu berücksichtigen. Da Druck-und Temperaturänderungen der Hydraulikflüssigkeit die Anzugs-und Abfallzeit der Magnetventile verändern können, wird entsprechend Anspruch 6 vorgeschlagen, diese durch Druck-und Temperaturänderungen verursachten Änderungen der Anzugs-und Abfallzeit der Magnetventile als Korrekturgröße ebenfalls bei der Berechnung der Öffnungspulse zu berücksichtigen.

Da sich beim Öffnen des oder der Abflußmagnetventile der Druck im Stellzylinder verändert und die pro Zeiteinheit durch die Abflußmagnetventile abströmende Menge der Hydraulikflüssigkeit von diesem Stellzylinderdruck abhängig ist, wird entsprechend dem Anspruch 7 vorgeschlagen, den Belastungs druck im Stellzylinder im Takt zu messen und bei der Berechnung der Öffnungspulse für die Abflußmagnetventile ebenfalls als Korrekturgröße zu berücksichtigen.

Beim Öffnen der den Stellvorgang des Drosselkörpers auslösenden Zuflußmagnetventile ändert sich der Belastungsdruck im Stellzylinder und außerdem der Druck im Speicher des Hydrauliksteuerkreises. Die pro Zeiteinheit durch die Zuflußmagnetventile strömende Menge an Hydraulikflüssigkeit hängt außer vom Durchflußquerschnitt auch von der Differenz zwischen Speicherdruck und Belastungsdruck ab. Dementsprechend wird gemäß dem Merkmal des Anspruchs 8 die Druckdifferenz zwischen dem Druck im Speicher des Hydrauliksteuerkreises und dem Belastungsdruck im Stellzylinder im Takt gemessen und bei der Berechnung der Öffnungspulse des oder der Zuflußmagnetventile als Korrekturgröße berücksichtigt.

Da die errechneten Hubschritte des Drosselkörpers von dem tatsächlichen Hub abweichen können, wird entsprechend den Merkmalen des Anspruchs 9 vorgeschlagen, die jeweilige Hubstellung des Stellventils als Hubistwert durch einen Wegaufnehmer im Takt zu messen und diesen Hubistwert mit den errechneten Hubschritten zu vergleichen. Bei auftretenden Differenzen werden die errechneten Öffnungspulse entsprechend korrigiert, so daß Steuerfehler, die durch nicht exakte Hubschritte ausgelöst werden, mit Sicherheit vermieden werden.

Da die Viskosität der Hydraulikflüssigkeit von der Temperatur abhängig ist und die pro Zeiteinheit durch die Magnetventile hindurchströmende Menge der Hydrau likflüssigkeit sich mit zunehmender Viskosität verringert, wird gemäß Anspruch 10 vorgeschlagen, die bekannte Temperatur/Viskositätskennlinie der Hydraulikflüssigkeit elektronisch zu speichern und die Temperatur der Hydraulikflüssigkeit im Takt zu messen. Dadurch kann die sich mit der Temperatur ändernde Viskosität und damit der sich ändernde Strömungswiderstand der Magnetventile bei der Berechnung der Öffnungspulse berücksichtigt werden.

Die Berücksichtigung der Viskosität der Hydraulikflüssigkeit ist nur in einem gewissen Temperaturbereich sinnvoll, da bei zu niedrigen Temperaturen die Hubverstellung des Stellventils zu langsam vor sich geht und bei zu hohen Flüssigkeitstemperaturen die mit der Hydraulikflüssigkeit in Wärmeleitverbindung kommenden elektrischen oder elektronischen Bauteile der Steuerung, zum Beispiel die Spulen der Magnetventile, geschädigt werden können. Um einerseits ein zu langsames Verstellen des Drosselkörpers und andererseits eine Schädigung elektrischer Bauteile zu vermeiden, wird im Anspruch 11 vorgeschlagen, bei Unterschreiten eines unteren Temperaturgrenzwertes der Hydraulikflüssigkeit eine Heizung zur Erwärmung der Hydraulikflüssigkeit und bei überschreiten eines oberen Temperaturgrenzwertes eine Kühlung selbsttätig einzuschalten. Die Erwärmung der Hydraulikflüssigkeit kann hierbei in einfacher Weise gemäß dem Merkmal des Anspruchs 12 dadurch erfolgen, daß bei Unterschreiten des unteren Temperaturgrenzwertes die Hydraulikpumpe des Hydrauliksteuerkreises so lange eingeschaltet wird bzw. bleibt, bis sich die Hydraulikflüssigkeit durch die in Wärmeenergie umgewandelte Verlustleistung des Hydrauliksystems ausreichend erwärmt hat.

Die für die Steuerung des Stellventils vorgesehene elektronische Einrichtung ermöglicht es auch, die Funktionssicherheit des Stellventils durch Überwachung der wichtigsten Bauelemente und rechtzeitige Meldung von Störungen zu erhöhen. Hierfür wird entsprechend Anspruch 13 vorgeschlagen, die Zustandsgrößen mindestens der funktionswichtigsten elektrischen, elektronischen und hydraulischen Bauteile im Zyklus zu messen und mit elektronisch gespeicherten Grenzwerten im Rechner zu vergleichen. Bei Grenzwertüberschreitungen gibt der Rechner entsprechende Störungssignale ab, so daß die Störungsursache rechtzeitig behoben und ein eventueller Schaden vermieden werden kann.

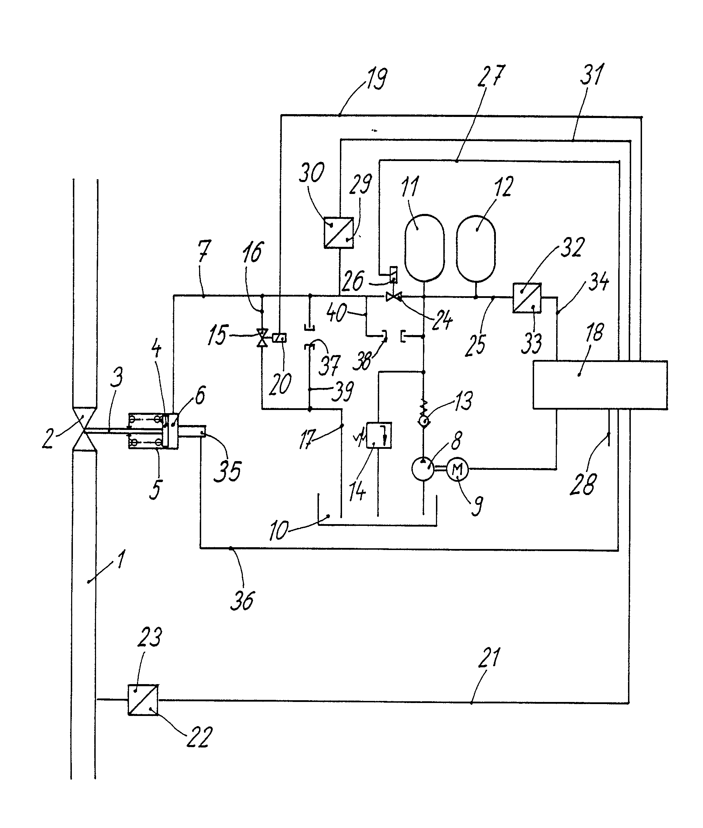

Die Erfindung wird in einem Ausführungsbeispiel näher erläutert, das die Zeichnung erkennen läßt. In dem dargestellten Schaltschema ist in die vom Medium durchflossene Rohrleitung 1 ein Stellventil 2 eingebaut. Der Drosselkörper dieses Stellventils 2 ist über eine Ventilstange 3 mit dem Kolben 4 eines hydraulischen Stellzylinders 5 verbunden. Die Belastungskammer 6 des Stellzylinders 5 ist über eine Hydraulikleitung 7 an einen Hydrauliksteuerkreis angeschlossen, der in seinem Grundaufbau aus einer Hydraulikpumpe 8 mit Motor 9, einem Ölvorratsbehälter 10 und zwei parallelgeschalteten Speichern 11 und 12 besteht. Im Hydrauliksteuerkreis sind außerdem noch ein Rückschlagventil 13 und ein Druckbegrenzungsventil 14 vorgesehen.

Die Abführung der Hydraulikflüssigkeit aus der Belastungskammer 6 des Stellzylinders 5 erfolgt über das Abflußmagnetventil 15, das eingangsseitig über die Abzweigleitung 16 an die Hydraulikleitung 7 und ausgangsseitig an die zum Ölvorratsbehälter 10 führende Abflußleitung 17 angeschlossen ist. Das Abfluß magnetventil 15 wird von einer Elektronikbaueinheit 18 gesteuert, die über eine Steuerleitung 19 Öffnungspulse auf den elektrischen Schaltteil 20 bzw. die Magnetspule des Abflußmagnetventils 15 überträgt. Die Elektronikbaueinheit 18 steht eingangsseitig über die Meßleitung 21 mit dem elektrischen Signalausgang 22 eines an die Rohrleitung 1 angeschlossenen Meßwertaufnehmers 23 in Verbindung. Während das Abflußmagnetventil 15 zur Steuerung des Drosselkörpers in der einen Richtung vorgesehen ist, wird die Steuerung des Drosselkörpers in der Gegenrichtung über das Zuflußmagnetventil 24 durchgeführt, das eingangsseitig an die Druckleitung 25 des Hydrauliksteuerkreises und ausgangsseitig an die zur Belastungskammer 6 führende Hydraulikleitung 7 angeschlossen ist. Der elektrische Schaltteil 26 bzw. die Magnetspule des Zuflußmagnetventiles 24 wird über die Steuerleitung 27 von der Elektronikbaueinheit 18 aus geschaltet.

In der Elektronikbaueinheit 18 sind alle für die Steuerung des Stellventils 2 erforderlichen elektronischen Baugruppen wie Rechner, Speicher, Verstärker und die übrigen elektronischen Module zusammengefaßt. In dem elektronischen Speicher der Elektronikbaueinheit 18 werden die von der Regelabweichung, die von dem zeitlichen Integral der Regelabweichung und die von dem zeitlichen Differential der Regelabweichung abhängigen gewünschten Kennlinien vor Inbetriebnahme der Regelstrecke eingegeben. Außerdem wird ein fester Sollwert für die Regelgröße im Elektronikspeicher eingegeben, oder es wird über die elektrische Zuleitung 28 eine variable Führungsgröße übertragen. Je nach der im Rechner bestimmten Regelabweichung aus Istwert minus Sollwert bzw. minus Führungsgröße sowie aus dem errechneten Integral und dem errechneten Differential bestimmt der Rechner aufgrund der gespeicherten Kennlinien für jeden Takt die Größe des auszuführenden Hubschrittes des Drosselkörpers des Stellventils 2. Zur Durchführung dieses Hubschrittes wird in der Elektronikbaueinheit 18 die aus der Belastungskammer 6 abzuführende bzw. die der Belastungskammer 6 zuzuführende Ölmenge bestimmt und hierauf der auf das Abflußmagnetventil 15 bzw. auf das Zuflußmagnetventil 24 zu übertragende Öffnungspuls errechnet. Dadurch wird der Kolben 4 des Stellventils 5 und damit der Drosselkörper des Stellventils 2 im Takt schrittweise in die eine oder in die andere Richtung verstellt.

Um den Belastungsdruck im Stellzylinder 5 bei der Berechnung der Öffnungspulse für das Abflußmagnetventil 15 als Korrekturgröße berücksichtigen zu können, ist noch ein Druckaufnehmer 29 an die Hydraulikleitung 7 angeschlossen, dessen elektrischer Ausgang 30 über die Meßleitung 31 mit der Elektronikbaueinheit 18 in Verbindung steht. Ein weiterer Druck-und Temperaturaufnehmer 32 ist an die Druckleitung 25 des Hydrauliksteuerkreises angeschlossen, dessen elektrischer Ausgang 33 über die Meßleitung 34 mit der Elektronikbaueinheit 18 in Verbindung steht. Über diesen Druck-und Temperaturaufnehmer 32 kann der Differenzdruck, der am Zuflußmagnetventil 24 ansteht sowie die Temperatur des Hydrauliköles als Korrekturgröße bei der Berechnung der Öffnungspulse berücksichtigt werden. Um Berechnungsfehler in der Elektronikbaueinheit 18 bei der Festlegung der auszuführenden Hubschritte korrigieren zu können, ist außerdem noch am Stellzylinder 5 ein Hubaufnehmer 35 vorgesehen, dessen elektrischer Ausgang über die Meßleitung 36 mit der Elektronikbaueinheit 18 verbunden ist.

Die Einbauanschlüsse 37 und 38 in den Parallelleitungen 39 und 40 sind vorgesehen worden, damit noch ein zusätzliches Abflußmagnetventil oder ein zusätzliches Zuflußmagnetventil eingebaut werden kann.

### Ansprüche

1. Verfahren zum Regeln von durchflußabhängigen Regelgrößen wie Druck, Füllstand oder dergleichen mittels eines den Durchfluß steuernden Stellventils, dessen Drosselkörper von einem an einen Hydrauliksteuerkreis angeschlossenen Stellzylinder durch Zuführen oder Abführen von Hydraulikflüssigkeit in seiner Hubstellung verändert wird, wobei die Verstellung des Drosselkörpers in Abhängigkeit von der Regelabweichung Istwert minus Sollwert der Regelgröße, vom zeitlichen Integral dieser Regelabweichung und vom zeitlichen Differential dieser Regelabweichung erfolgt, **dadurch gekennzeichnet**, daß

a) von der Regelabweichung, von dem zeitlichen Integral dieser Regelabweichung und von dem zeitlichen Differential dieser Regelabweichung bestimmte Kennlinien für den Hub des Drosselkörpers in Anpassung an die Regelstrecke erstellt und in Form von Punkten der Kennlinien oder als Koeffizienten analytischer Funktionen elektronisch gespeichert werden,

b) die Regelgröße in kurzer Taktzeit gemessen und gespeichert wird,

c) das zeitliche Integral und das zeitliche Differential der Regelabweichung in dieser Taktzeit in einem elektronischen Rechner errechnet und entsprechend den gespeicherten Kennlinien für jeden Takt die Größe des dazugehörigen auszuführenden Hubschrittes des Drosselkörpers für ein schrittweises Öffnen oder Schließen des Stellventils festgelegt wird,

d) der elektronische Rechner die pro Takt über ein oder mehrere schnell ansprechende Abflußmagnetventile abzuführende oder die über ein oder mehrere schnell ansprechende Zuflußmagnetventile zuzuführende Menge der Hydraulikflüssigkeit berechnet und hieraus die elektrischen Öffnungspulse der Magnetventile für jeden Takt bestimmt und

e) diese Öffnungspulse über Verstärker an die Abfluß-oder Zuflußmagnete abgegeben werden, die den Verstellvorgang des Stellventils in Übereinstimmung mit den eingegebenen Kennlinien bei kleinen Regelabweichungen in kleinen Hubschritten und bei großen Regelabweichungen in großen Hubschritten steuern.

2. Verfahren nach Anspruch 1, **dadurch gekennzeichnet,** daß schnell ansprechende Magnetventile mit veränderbarem Öffnungsquerschnitt vorgesehen sind und diese Öffnungsquerschnittsänderungen elektronisch gespeichert und bei der Berechnung der Öffnungspulse für die Magnetventile im Rechner berücksichtigt werden.

3. Verfahren nach Anspruch 2, **dadurch gekennzeichnet** , daß ein oder mehrere vorgesteuerte Magnetventile vorgesehen sind, bei denen bei kurzen Öffnungspulsen nur der Vorsteuerkegel mit kleinem Querschnitt öffnet und bei längeren Öffnungspulsen nach Überwindung der Totzeit für das Ansprechen des Hauptkegels der große Hauptkegelquerschnitt freigegeben wird.

4. Verfahren nach Anspruch 2, **dadurch gekennzeichnet,** daß mehrere schnell ansprechende Magnetventile mit gleichem oder unterschiedlichem Öffnungsquerschnitt in Parallelschaltung vorgesehen sind, von denen das oder die parallelgeschalteten Magnetventile bei großen ab-oder zuzuführenden Mengen der Hydraulikflüssigkeit zugeschaltet werden.

5. Verfahren nach einem oder mehreren der Ansprüche 1 bis 4, **dadurch gekennzeichnet,** daß die Anzugszeit und die Abfallzeit der schnell ansprechenden Magnetventile bei der Berechnung der Öffnungspulse als Korrekturgröße berücksichtigt werden.

6. Verfahren nach Anspruch 5, **dadurch gekennzeichnet,** daß die sich durch Druck-und Temperaturänderungen der Hydraulikflüssigkeit ergebenden Änderungen der Anzugs-und Abfallzeit der Magnetventile als Korrekturgröße bei der Berechnung der Öffnungspulse berücksichtigt werden.

7. Verfahren nach einem oder mehreren der Ansprüche 1 bis 6, **dadurch gekennzeichnet,** daß der Belastungsdruck im Stellzylinder im Takt gemessen und bei der Berechnung der Öffnungspulse für die Abflußmagnetventile als Korrekturgröße berücksichtigt wird.

8. Verfahren nach einem oder mehreren der Ansprüche 1 bis 7, **dadurch gekennzeichnet,** daß die Druckdifferenz zwischen dem Druck im Speicher des Hydrauliksteuerkreises und dem Belastungsdruck im Stellzylinder im Takt gemessen und bei der Berechnung der Öffnungspulse des oder der Zuflußmagnetventile als Korrekturgröße berücksichtigt wird.

9. Verfahren nach einem oder mehreren der Ansprüche 1 bis 8, **dadurch gekennzeichnet,** daß die jeweilige Hubstellung des Stellventils als Hubistwert durch einen Wegaufnehmer im Takt gemessen und dieser Hubistwert mit den errechneten Hubschritten verglichen wird, wobei bei auftretenden Differenzen die errechneten Öffnungspulse entsprechend korrigiert werden.

10. Verfahren nach einem oder mehreren der Ansprüche 1 bis 9, **dadurch gekennzeichnet,** daß die bekannte Temperatur/Viskositäts-Kennlinie der Hydraulikflüssigkeit elektronisch gespeichert und die Temperatur der Hydraulikflüssigkeit im Takt gemessen wird und die sich mit der Temperatur ändernde Viskosität und damit der sich ändernde Strömungswiderstand der Magnetventile bei der Berechnung der Öffnungspulse berücksichtigt wird.

11. Verfahren nach einem oder mehreren der Ansprüche 1 bis 10, **dadurch gekennzeichnet,** daß bei Unterschreiten eines unteren Temperaturgrenzwertes der Hydraulikflüssigkeit eine Heizung zur Erwärmung der Hydraulikflüssigkeit und bei Überschreiten eines oberen Temperaturgrenzwertes eine Kühlung selbsttätig eingeschaltet wird.

12. Verfahren nach Anspruch 11, **dadurch gekennzeichnet** , daß bei Unterschreiten des unteren Temperaturgrenzwertes die Hydraulikpumpe des Hydraulikkreislaufes so lange eingeschaltet wird bzw. bleibt, bis sich die Hydraulikflüssigkeit durch die in Wärmeenergie umgewandelte Verlustleistung des Hydrauliksystems ausreichend erwärmt hat.

13. Verfahren nach einem oder mehreren der Ansprüche 1 bis 12, **dadurch gekennzeichnet,** daß die Zustandsgrößen mindestens der funktionswichtigsten elektrischen, elektronischen und hydraulischen Bauteile im Zyklus gemessen und mit elektronisch gespeicherten Grenzwerten im Rechner verglichen werden, der bei Grenzwertüberschreitungen entsprechende Störungssignale abgibt.